# FASCICULE DE BREVET EUROPEEN

(11) **EP 1 204 803 B1**
(45) Date de publication et mention de la délivrance du brevet: **21.02.2007**
(21) Numéro de dépôt: 00956626.6
(22) Date de dépôt: 04.08.2000
(51) Int. Cl.: E06B 3/54, E06B 5/16

(54) **FIXATION POUR UN VITRAGE COMPOSITE**
BEFESTIGUNGSVORRICHTUNG EINER VERBUNDGLASSCHEIBE
FIXING ELEMENT FOR COMPOSITE GLASS PANE

(30) Priorité: 12.08.1999 DE 19938250
(43) Date de publication de la demande: 15.05.2002
(73) Titulaire: SAINT-GOBAIN GLASS FRANCE, 92400 Courbevoie (FR)
(72) Inventeur: WILDENHAIN, Klaus, 40625 Düsseldorf (DE); LINDEN, Ralf, 52074 Aachen (DE)
(74) Mandataire: Muller, René
(86) Numéro de dépôt international: PCT/FR2000/002253
(87) Numéro de publication internationale: WO 2001/012939

(56) Documents cités:
- EP-A- 0 595 062
- EP-A- 0 682 164
- FR-A- 2 658 237

## Description

L'invention concerne un vitrage composite ayant les caractéristiques du préambule de la revendication 1.

Ces caractéristiques sont connues par le document EP 0 528 781. Ce document divulgue un vitrage de protection anti-feu comprenant un élément vitré logé dans un cadre de fixation avec une vitre en verre au silicate précontrainte collée par-dessus du côté du feu, laquelle se termine à une certaine distance du cadre de fixation. Sur le cadre de fixation sont disposées des lames de fixation individuelles en saillie, pour supporter la vitre supplémentaire en verre au silicate, et presser élastiquement sur sa surface principale. En cas de feu, la vitre supplémentaire doit assurer un échauffement uniforme, et contribuer à l'absorption de l'énergie calorifique, de sorte que l'élément vitré se trouvant derrière elle résiste plus longtemps au feu. Pour coller la vitre supplémentaire, on peut par exemple utiliser du polyvinylbutyral ou une autre matière synthétique organique appropriée. Sous l'effet de la chaleur, la couche de colle fond, si bien que la liaison ne tient plus. La vitre supplémentaire n'est alors plus maintenue dans sa position que mécaniquement par les lames de fixation. Du fait que les lames de fixation sont montées ponctuellement, il ne subsiste aucun écran étendu protégeant la vitre supplémentaire, qui est donc chauffée substantiellement uniformément, ce qui fait qu'il ne se produit pas de différences de température dangereuses ni par conséquent de tensions dangereuses au sein de la vitre.

Un inconvénient du vitrage anti-feu décrit dans cette publication, de sa fixation et de sa protection contre les chutes, réside dans le fait qu'on utilise un cadre et des lames de fixation qui déparent l'aspect visuel et compliquent les tâches de nettoyage. La surface du vitrage est de plus fissurée par les joints de la vitre supplémentaire en retrait.

L'invention a pour objet de proposer une fixation améliorée pour des vitrages composites utilisés de préférence dans des vitrages de protection contre le feu, ou vitrages anti-feu.

Cet objet est résolu selon l'invention par les caractéristiques de la revendication 1. Les caractéristiques des revendications dépendantes indiquent des perfectionnements avantageux de cet objet.

Conformément à l'invention, la fixation du vitrage composite comprend, au niveau d'une sous-construction ou sous-structure, au moins un appui ponctuel, qui n'est connecté qu'avec l'élément vitré, les éléments de sécurité serrant un plan de réception qui est situé à une certaine distance de la surface principale libre du vitrage supplémentaire. Les appuis ponctuels sont usuellement les éléments de fixation bien connus en soi, qui viennent en prise à l'intérieur de la surface de la vitre composite et qui sont pourvus de moyens pour compenser les tolérances de construction et d'installation ainsi que de degrés de liberté pour équilibrer les forces internes et externes s'exerçant sur les vitres.

L'utilisation de tels appuis ponctuels permet de se passer d'un cadre bordant le vitrage composite ou l'élément vitré. Il est ainsi possible d'utiliser une vitre supplémentaire de même dimension que l'élément de vitré. Au besoin, la vitre supplémentaire peut même dépasser ou être en retrait par un ou plusieurs bords de l'élément vitré.

Il faut entendre, par élément vitré, tout type de vitrage usuel dans le bâtiment, c'est-à-dire qu'on peut utiliser en tant qu'élément vitré un vitrage feuilleté, un vitrage isolant, voire une feuille de verre individuelle. A l'intérieur du vitrage feuilleté ou isolant, les vitres individuelles peuvent se composer de simple verre flotté, ou être précontraintes ou partiellement précontraintes (trempées). On peut aussi envisager de concevoir des vitres individuelles du vitrage feuilleté ou isolant, en une matière synthétique.

Comme la vitre supplémentaire n'est pas reliée directement par un ou plusieurs appuis ponctuels à la sous-construction, elle doit être fixée à l'élément vitré par un autre moyen de fixation indépendant. Un moyen de fixation préféré est un collage. Par exemple, pour assembler l'élément vitré et la vitre supplémentaire, on peut utiliser un film de colle thermoplastique, notamment en polyvinylbutyral. L'assemblage est alors réalisé avec un procédé usuel par application de chaleur et de pression.

On peut utiliser en tant que vitre supplémentaire une feuille individuelle de verre flotté. Pour des applications spécifiques, il est toutefois avantageux que la vitre supplémentaire se compose de plusieurs vitres individuelles assemblées les unes aux autres. Afin d'obtenir les résistances prescrites ou satisfaire les conditions de sécurité spécifiques, la ou les vitres peuvent être précontraintes ou partiellement précontraintes. Il est également possible de prévoir en tant que vitre supplémentaire une vitre anti-feu, de sorte que l'on obtienne une résistance accrue à la chaleur. Au commencement d'un incendie, la vitre supplémentaire absorbe une partie de l'énergie calorifique, en réfléchit une autre partie, et protège ainsi l'élément vitré fixé à la sous-construction contre tout échauffement inacceptable. Au cas où le moyen de fixation entre la vitre supplémentaire et l'élément vitré ne tiendrait plus en raison de l'échauffement, la vitre supplémentaire descendrait sur les éléments de sécurité qui sont disposés à une certaine distance de sa surface principale libre. Il en résulterait donc un espace supplémentaire entre la vitre anti-feu et l'élément vitré, qui se remplit de gaz et a un effet isolant contre tout apport de chaleur supplémentaire. Un avantage d'un tel vitrage composite pourvu d'une fixation selon l'invention est qu'il indique la défaillance en cas de feu de l'assemblage collé par l'abaissement défini de la vitre supplémentaire sur les éléments de sécurité.

La vitre supplémentaire peut être pourvue d'un revêtement réfléchissant la chaleur, afin de mieux protéger la sous-construction et/ou l'élément vitré contre une source de chaleur et ainsi de la ou le protéger pendant une période de temps plus longue contre un échauffement inacceptable. Il est en l'occurrence judicieux de pourvoir la surface libre de la vitre supplémentaire d'un revêtement réfléchissant la chaleur, car celle-ci est tournée vers la source de chaleur en cas de feu. Pour de telles applications, par exemple des couches transparentes minces à base d'un oxyde métallique se sont avérées satisfaisantes.

On peut pourvoir la vitre supplémentaire d'au moins un évidement, à travers lequel s'étend un support pour les éléments de sécurité. L'évidement peut être un alésage traversant circulaire, mais d'autres formes telles que des évidements rectangulaires ou elliptiques sont également possibles. L'évidement peut aussi être prévu en principe au bord de la vitre supplémentaire.

Si l'on veut fixer Les éléments de sécurité en particulier de manière avantageuse directement sur les appuis ponctuels, il faut réaliser un évidement dans la vitre supplémentaire dans la région de l'appui ponctuel concerné.

L'appui ponctuel peut également être fixé à travers l'évidement à l'élément vitré, par exemple en prévoyant aussi un alésage dans l'élément de vitrée en verre et en assemblant ce dernier de force à l'aide d'un assemblage à écrou et boulon à l'appui ponctuel. Dans ce cas, un boulon fileté amené sur l'appui ponctuel peut être inséré depuis le côté de la sous-construction à travers l'alésage, et serré par le côté opposé avec un écrou sur l'élément vitré. Naturellement, on utilisera les supports et/ou joints élastiques usuels lors du montage d'éléments en verre.

Les éléments de sécurité eux-mêmes peuvent être prévus directement sur l'écrou, de sorte que ceux-ci serrent le plan de réception à une certaine distance de la surface libre de la vitre supplémentaire. Dans le cas d'un alésage en tant qu'évidement dans la vitre supplémentaire, les éléments de sécurité se composent de manière appropriée de joints toriques, disques ou segments de bagues ou de disques avec un diamètre extérieur ou périmètre supérieure au diamètre de l'alésage. On peut aussi envisager des éléments de sécurité en forme de pattes ou de crochets. Dans une autre forme de réalisation, les éléments de sécurité peuvent être des câbles ou des tiges, par exemple en acier, qui s'étendent entre deux appuis ponctuels ou plus.

Il n'est toutefois pas absolument nécessaire de fixer les éléments de fixation seulement indirectement à l'élément vitré au moyen des appuis ponctuels, mais ils peuvent en principe également être fixés ailleurs indépendamment des appuis ponctuels, directement sur l'élément vitré, et ce sur son bord ou sur sa surface orientée vers la vitre supplémentaire.

Des fixations selon l'invention sont adaptées, dans une utilisation revendiquée comme préférée, pour des vitrages, en particulier des vitrages de grande surface et/ou sans cadre, obliques, au-dessus de la tête ou de plafond, également et précisément dans des environnements à risques d'incendie.

Finalement, il est également revendiqué un vitrage anti-feu utilisant les fixations selon l'invention, dans lequel, en cas de feu et de défaillance de l'assemblage entre l'élément vitré et la vitre supplémentaire, cette dernière est reçue et maintenue par les éléments de sécurité en formant un espace intermédiaire d'isolation supplémentaire pour l'élément vitré.

D'autres particularités et avantages de l'objet de l'invention résultent du dessin non limitatif d'un exemple de réalisation et de sa description telle qu'exposée ci-dessous.

Les dessins montrent, en représentation simplifiée :
- à la figure 1 une forme de réalisation de la fixation selon l'invention d'un vitrage composite avec une vitre anti-feu collée en tant que vitre supplémentaire,
- à la figure 2 la fixation de la vitre composite après la défaillance de la couche de colle en cas de feu
- et à la figure 3 une coupe d'un vitrage de grande surface utilisant la fixation selon l'invention.

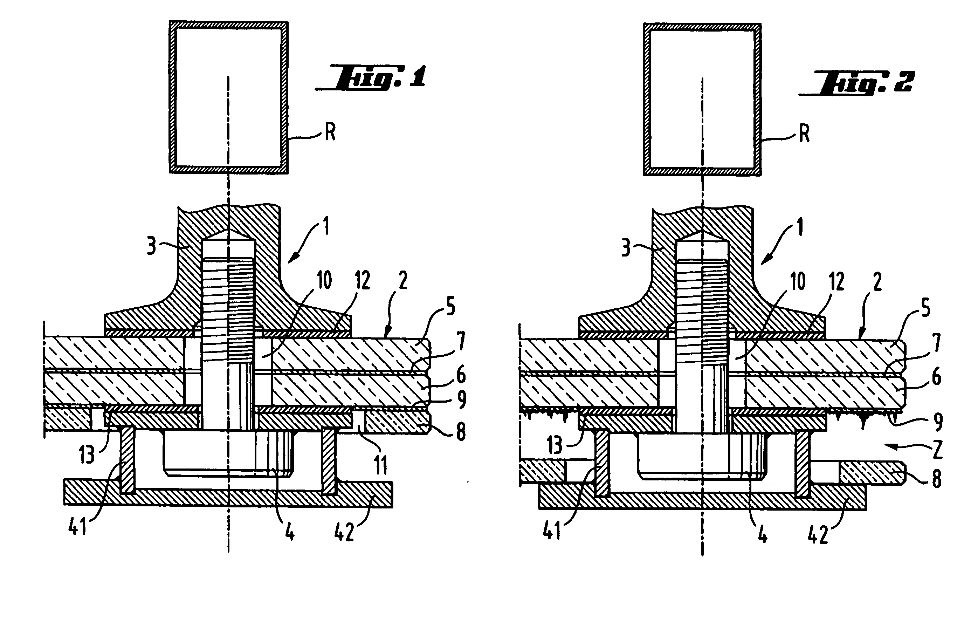

Conformément à la figure 1, la fixation 1 pour un vitrage composite 2 se compose d'un appui 3 et d'une vis de serrage 4, qui forment un appui ponctuel. Le vitrage composite 2 est réalisé en tant que vitrage anti-feu, deux feuilles de verre 5 et 6 en verre flotté partiellement précontraint étant dans ce cas laminées sur un film de colle thermoplastique 7 en polyvinylbutyral pour former un élément vitré sous forme verre composite 5, 7, 6. A cet élément est collée en tant que vitre supplémentaire 8 à nouveau une vitre pare-feu en verre au silicate hautement précontraint, également au moyen d'un film de colle 9 en polyvinylbutyral.

L'appui 3 peut par exemple être introduit et soudé dans le tube R d'une sous-construction illustrée avec son extrémité libre opposée au vitrage composite 2. Dans cet assemblage illustré ici de façon très simplifiée, on peut aussi prévoir les moyens usuels pour compenser les tolérances et/ou les déformations élastiques dues aux forces extérieures et aux dilatations thermiques. Il s'entend que le nombre des appuis ponctuels (3, 4) à utiliser pour un vitrage composite dépend des dimensions et du poids du composite; en général, chaque vitrage composite nécessitera plusieurs fixations avec les degrés de liberté requis.

La fixation 1 est assemblée à l'élément vitré feuilleté 5, 7, 6 par le biais d'un raccord à pince. Pour cela, on prévoit dans la vitre en feuilletée 5, 7, 6, un alésage 10 à travers lequel passe un boulon à filetage externe illustré ici schématiquement, monté sur la vis de serrage 4. Ce boulon est vissé dans un filetage interne correspondant également illustré schématiquement, dans l'appui 3. Afin que la fixation 1 ne vienne en prise qu'avec la vitre feuilletée 5, 7, 6, un évidement rond 11 se trouve dans la vitre supplémentaire 8, que la vis de serrage 4 traverse sans contact avec la vitre supplémentaire.

Entre l'appui 3 et la feuille de verre 5 ainsi qu'entre la vis de serrage 4 et la feuille de verre 6 sont disposés des joints d'étanchéité, notamment toriques 12 et 13. Ceux-ci peuvent par exemple se composer d'une matière synthétique élastique ou d'un matériau à base de fibre aramide et ont pour objet de sceller hermétiquement l'alésage 10 et de protéger les surfaces des feuilles de verre 5 et 6 contre les endommagements par les forces de serrage de la fixation 1. l'étanchéité doit empêcher dans des conditions normales la pénétration d'humidité et assurer l'étanchéité à l'air; en cas d'incendie, le passage des flammes et des gaz de fumée vers la sous-construction doit également être retardé aussi longtemps que possible.

Un élément de sécurité 42 est fixé sur la vis de serrage 4 avec une rondelle d'écartement 41 interposée, et ce du côté de la vitre supplémentaire 8. Plusieurs de ces éléments de sécurité forment le plan de réception écarté de la surface libre de la vitre supplémentaire 8. La rondelle d'écartement 41 sert de support pour l'élément de sécurité 42 et traverse le plan de la vitre supplémentaire.

Les connexions entre la vis de serrage 4, la rondelle d'écartement 41 et l'élément de sécurité 42 peuvent par exemple être réalisées par soudage, de sorte que lors du vissage de la vis, l'élément de sécurité 42 soit simultanément installé. L'élément de sécurité 42 est ici réalisé sous la forme d'une vis de diamètre supérieur au diamètre de l'évidement rond 11, de sorte que la vitre supplémentaire 8 soit retenue lors d'une défaillance du film de colle 9. Un tel plan de réception peut toutefois aussi être formé par des éléments de sécurité en forme de bague circulaire de diamètre extérieur correspondant, par des saillies individuelles dirigées vers l'extérieur ou par des crochets sur la rondelle d'écartement ou par le serrage de câbles entre deux rondelles d'écartement ou plus. Au cas où les éléments de sécurité sont visibles vers l'extérieur, ils peuvent en outre au besoin être utilisés en tant qu'éléments de structure pour l'aspect général visuel d'un vitrage avec un ou plusieurs vitrages composites, en faisant varier leur nombre, leur forme et/ou leur couleur.

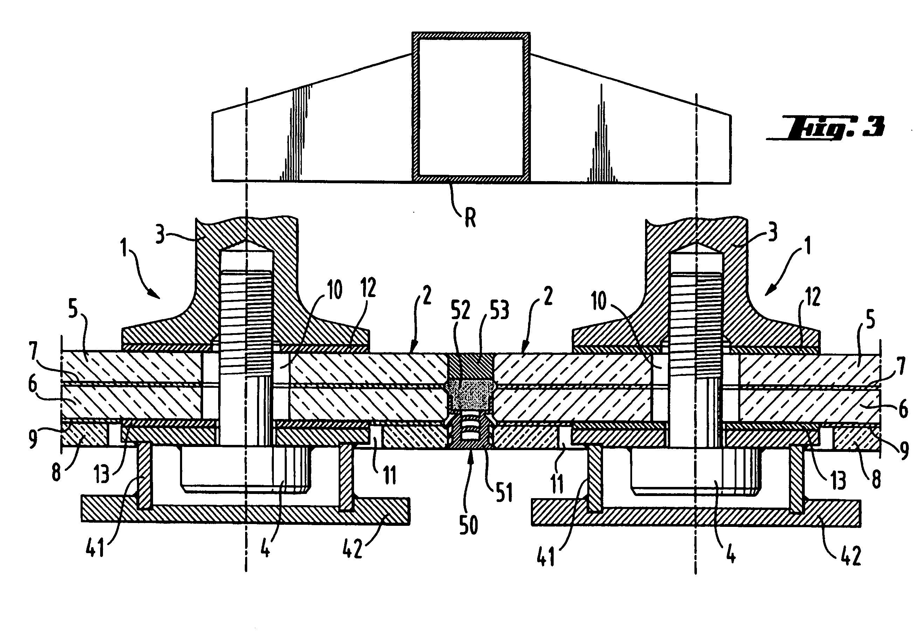

La figure 2 illustre la fixation 1 et le vitrage composite 2 après défaillance du film de colle 9 après l'action de la chaleur par un feu. Au commencement d'un incendie se produisant du côté de la vitre supplémentaire 8 opposé à l'appui 1, celle-ci absorbe une grande partie de l'énergie calorifique, son volume total pouvant s'échauffer dans une mesure telle que le film de colle adjacent 9 en polyvinylbutyral fond (à partir d'environ 105°C). L'assemblage par collage entre la vitre en verre feuilleté 5, 7, 6 et la vitre supplémentaire 8 se desserre, et la vitre supplémentaire 8 descend sur l'élément de sécurité 42 monté à une distance d'environ 20 mm. La défaillance de l'assemblage par collage se produit en l'occurrence en raison de la mauvaise conductivité thermique des feuilles de verre et du film de polyvinylbutyral, à un stade précoce que la vitre feuilletée 5, 7, 6 n'a encore pas été exposée à des températures critiques. Du reste, la séparation des vitres individuelles 5 et 6 également en cas de ramollissement éventuel du film de colle 7 est empêché par la fixation par serrage commune au moyen de l'appui ponctuel (3, 4). Lors de l'abaissement de la vitre supplémentaire 8 sur l'élément de sécurité 42, il se crée un espace intermédiaire rempli de gaz Z entre la vitre en verre feuilleté 5, 7, 6 et la vitre supplémentaire 8, qui sert en outre d'isolation contre un apport de chaleur supplémentaire sur la fixation 1, la sous-construction et la vitre en verre composite 5, 7, 6. L'effet isolant est si puissant que même après un ramollissement éventuel de la vitre supplémentaire 8, la vitre en verre feuilleté 5, 7, 6 et sa fixation 1 ne sont essentiellement pas encore affectées par la chaleur du feu. Les produits de combustion éventuels du film de colle 9 peuvent s'échapper dans l'espace intermédiaire créé Z et dans l'espace en feu, sans générer de surpression entre les vitres 6 et 8.
La figure 3 illustre une coupe dans un vitrage de grande surface avec des vitrages composites du type mentionné précédemment, en particulier le domaine de transition entre deux vitrages composites 2 fixés et sécurisés selon l'invention, dont le joint est rendu étanche par un dispositif d'étanchéité 50. Ce dernier se compose de trois éléments individuels, à savoir une garniture élastique profilée 51, une bande non combustible 52 et un colmatage au silicone 53.

La garniture élastique profilée 51 peut se composer de gomme, de caoutchouc ou d'un matériau similaire et sert à réaliser l'étanchéité du vitrage contre des milieux agissant depuis le côté de la vitre supplémentaire 8. Par une configuration correspondante du profil de la garniture 51, celle-ci peut être fixée par simple enfichage en affleurement dans la fente. La bande non combustible 52 en matériau céramique, comme par exemple un papier céramique, fait obstacle, en cas d'incendie, à la température, dans une mesure telle que le colmatage au silicone 53 soit protégé contre tout échauffement inacceptable. Le colmatage au silicone 53 a pour but, en cas d'incendie, d'assurer l'étanchéité du vitrage contre les gaz de fumée, tandis qu'il protège, dans les conditions d'utilisation normales, la bande non combustible 52 de l'humidité et des salissures pénétrant par le côté de la sous-construction.

Un dispositif d'étanchéité correspondant peut naturellement aussi être utilisé dans la région d'un raccord entre parois.

Selon les circonstances, les régions adjacentes de deux vitrages composites peuvent également être rendues étanches par un élément de garniture unique, par exemple par remplissage des joints avec du silicone ou par un profil de garniture profilé enfichable unique.

## Revendications

1. Vitrage composite (2) se composant d'un élément vitré (5, 6, 7) et d'une vitre supplémentaire (8) assemblée à celui-ci, en particulier vitrage anti-feu, ledit vitrage étant supporté par une fixation (1) sur une sous-construction, ladite fixation (1) comprenant des éléments de sécurité (42) pour recevoir la vitre supplémentaire (8) lors d'une défaillance de son assemblage avec l'élément vitré (5, 6, 7), **caractérisé en ce que** la fixation (1) comprend au moins un appui ponctuel (3, 4) venant en prise à l'intérieur de la surface du vitrage composite et fixant l'élément vitré (5, 7, 6) par force ou par engagement positif à la sous-construction, et **en ce que** les éléments de sécurité (42) forment un plan de réception écarté de la surface principale libre de la vitre supplémentaire (8).

2. Vitrage selon la revendication 1, **caractérisé en ce que** la vitre supplémentaire (8) est collée sur l'élément vitré(5, 7, 6).

3. Vitrage selon l'une quelconque des revendications précédentes, **caractérisé en ce que** les éléments de sécurité (42) sont fixés indirectement à l'élément vitré (5, 7, 6).

4. Vitrage selon l'une quelconque des revendications précédentes, **caractérisé en ce que** la vitre supplémentaire (8) présente au moins un évidement (11) traversé par un support des éléments de sécurité (42).

5. Vitrage selon l'une quelconque des revendications précédentes, **caractérisé en ce que** les éléments de sécurité (42) sont fixés respectivement sur un appui ponctuel (3, 4) traversant le plan de la vitre supplémentaire (8).

6. Vitrage selon la revendication 4 ou 5, **caractérisé en ce que** l'évidement (11) est un alésage traversant dans la vitre supplémentaire (8) et **en ce que** les éléments de sécurité (42) sont conçus en tant que bagues, disques, segments de bague ou segments de disque avec un diamètre extérieur plus grand que l'alésage traversant.

7. Vitrage selon l'une quelconque des revendications précédentes, **caractérisé en ce que** la vitre supplémentaire (8) est précontrainte ou partiellement précontrainte.

8. Vitrage selon L'une quelconque des revendications précédentes, **caractérisé en ce que** la vitre supplémentaire (8) se compose d'au moins deux feuilles assemblées l'une à l'autre.

9. Vitrage selon l'une quelconque des revendications précédentes, **caractérisé en ce que** la vitre supplémentaire (8) est pourvue d'un revêtement réfléchissant la chaleur.

10. Vitrage selon l'une quelconque des revendications précédentes, **caractérisé en ce que** la vitre supplémentaire (8) se compose d'une vitre anti-feu monolithique ou multicouche.

11. Vitrage selon l'une quelconque des revendications précédentes, **caractérisé en ce que** l'élément vitré (5, 7, 6) est une vitre en verre feuilleté.

12. Vitrage selon l'une quelconque des revendications 1 à 10, **caractérisé en ce que** l'élément vitré (5, 7, 6) est un vitrage isolant constitué d'au moins deux feuilles de verre assemblées l'une à l'autre par un cadre d'écartement.

13. Vitrage selon l'une quelconque des revendications précédentes, **caractérisé en ce que** l'élément vitré (5, 7, 6) comprend au moins une vitre en verre précontrainte ou partiellement précontrainte.

14. Utilisation d'un vitrage selon l'une quelconque des revendications précédentes pour des vitrages obliques ou de plafond de grande surface et/ou sans cadre.

15. Vitrage selon l'une quelconque des revendications 1 à 13, anti-feu, dans lequel en cas de feu lors d'une défaillance de l'assemblage (9) entre l'élément vitré (5, 7, 6) et la vitre supplémentaire (8), cette dernière est reçue et maintenue par les éléments de sécurité (42) en formant un espace intermédiaire d'isolation supplémentaire (Z) pour l'élément vitré (5, 7, 6).

## Claims

1. Composite glazing (2) made up of a glazed element (5, 6, 7) and of an additional pane (8) assembled therewith, particularly fire-resistant glazing, said glazing being supported by a fixing (1) on a subconstruction, said fixing (1) comprising safety elements (42) for holding the additional pane (8) should its assembly with the glazed element (5, 6, 7) fail, **characterized in that** the fixing (1) comprises at least one point support (3, 4) which engage inside the surface of the composite glass and fixing the glazed element (5, 7, 6) by force or by positive engagement to the subconstruction, and **in that** the safety elements (42) form a holding plane away from the main free surface of the additional pane (8).

2. The glazing as claimed in claim 1, **characterized in that** the additional pane (8) is bonded to the glazed element (5, 7, 6).

3. The glazing as claimed in either of the preceding claims, **characterized in that** the safety elements (42) are fixed indirectly to the glazed element (5, 7, 6).

4. The glazing as claimed in any of the preceding claims, **characterized in that** the additional pane (8) has at least one opening (11) through which a support of the safety elements (42) passes.

5. The glazing as claimed in any of the preceding claims, **characterized in that** the safety elements (42) are fixed respectively to a point support (3, 4) passing through the plane of the additional pane (8).

6. The glazing as claimed in claim 4 or 5, **characterized in that** the opening (11) is a through-bore in the additional pane (8) and **in that** the safety elements (42) are designed as rings, disks, ring segments or disk segments with an outside diameter larger than the through-bore.

7. The glazing as claimed in any of the preceding claims, **characterized in that** the additional pane (8) is prestressed or partially prestressed.

8. The glazing as claimed in any of the preceding claims, **characterized in that** the additional pane (8) is made up of at least two sheets assembled with one another.

9. The glazing as claimed in any of the preceding claims, **characterized in that** the additional pane (8) is provided with a heat-reflective coating.

10. The glazing as claimed in any of the preceding claims, **characterized in that** the additional pane (8) is made up of a monolithic or multilayer fire-resistant pane.

11. The glazing as claimed in any of the preceding claims, **characterized in that** the glazed element (5, 7, 6) is a pane of laminated glass.

12. The glazing as claimed in any of the preceding claims, **characterized in that** the glazed element (5, 7, 6) is insulating glazing consisting of at least two sheets of glass assembled with one another by a spacing frame.

13. The fixing as claimed in any of the preceding claims, **characterized in that** the glazed element (5, 7, 6) comprises at least one pane made of prestressed or partially prestressed glass.

14. The use of a glazing as claimed in any of the preceding claims for oblique or roof glazing of the large-area and/or frameless type.

15. Glazing as claimed in any of claims 1 to 13 and being fire-resistant, in which, in the event of fire, if the assembly (9) between the glazed element (5, 7, 6) and the additional pane (8) fails, the latter pane is held and retained by the safety elements (42), at the same time forming an intermediate additional insulating gap (Z) from the glazed element (5, 7, 6).

## Patentansprüche

1. Verbundscheibe (2) aus einem Glasscheibenelement (5, 6, 7) und einer damit verbundenen Vorsatzscheibe (8), insbesondere für eine Brandschutz-verglasung, welche mit einer Befestigung (1) an einer Unterkonstruktion gehaltert wird, wobei die Befestigung (1) Sicherungselemente (42) zum Auffangen der Vorsatzscheibe (8) bei Versagen ihrer Verbindung mit dem Glasscheibenelement (5,6,7) enthält, **dadurch gekennzeichnet, dass** die Befestigung (1) wenigstens einen das Glasscheibenelement (5,6,7) kraft- oder formschlüssig an der Unterkonstruktion festlegenden Punkthalter (3, 4) umfaßt und dass die Sicherungselemente (42) eine von der freien Hauptfläche der Vorsatzscheibe (8) beabstandete Auffangebene bilden.

2. Verbundscheibe nach Anspruch 1, **dadurch gekennzeichnet, dass** die Vorsatzscheibe (8) an dem Glasscheibenelement (5, 7, 6) angeklebt ist.

3. Verbundscheibe nach einem der vorstehenden Ansprüche, **dadurch gekennzeichnet, dass** die Sicherungselemente (42) wenigstens mittelbar an dem Glasscheibenelement (5, 7, 6) befestigt sind.

4. Verbundscheibe nach einem der vorhergehenden Ansprüche, **dadurch gekennzeichnet, dass** die Vorsatzscheibe (8) mindestens eine von einer Halterung der Sicherungselemente (42) durchdrungene Ausnehmung (11) aufweist.

5. Verbundscheibe nach einem der vorstehenden Ansprüche, **dadurch gekennzeichnet, dass** die Sicherungselemente (42) jeweils an einem die Ebene der Vorsatzscheibe (8) durchdringenden Punkthalter (3, 4) befestigt sind.

6. Verbundscheibe nach Anspruch 4 oder 5, **dadurch gekennzeichnet, dass** die Ausnehmungen (11) in der Vorsatzscheibe (8) Lochbohrungen sind und dass die Sicherungselemente (42) als Ringe, Scheiben, Ringsegmente oder Scheibensegmente mit einem größeren Außendurchmesser als die Lochbohrung ausgebildet sind.

7. Verbundscheibe nach einem der vorhergehenden Ansprüche, **dadurch gekennzeichnet, dass** die Vorsatzscheibe (8) vorgespannt oder teilvorgespannt ist.

8. Verbundscheibe nach einem der vorhergehenden Ansprüche, **dadurch gekennzeichnet, dass** die Vorsatzscheibe (8) aus mindestens zwei miteinander verbundenen Scheiben besteht.

9. Verbundscheibe nach einem der vorhergehenden Ansprüche, **dadurch gekennzeichnet, dass** die Vorsatzscheibe (8) mit einer wärmereflektierenden Beschichtung versehen ist.

10. Verbundscheibe nach einem der vorhergehenden Ansprüche, **dadurch gekennzeichnet, dass** die Vorsatzscheibe (8) aus einer monolithischen oder mehrschichtigen Brandschutzscheibe besteht.

11. Verbundscheibe nach einem der vorhergehenden Ansprüche, **dadurch gekennzeichnet, dass** das Glasscheibenelement (5, 7, 6) eine Verbundglasscheibe ist.

12. Verbundscheibe nach einem der vorhergehenden Ansprüche, **dadurch gekennzeichnet, dass** das Glasscheibenelement (5, 7, 6) eine Isolierglasscheibe aus mindestens zwei über einen Abstandsrahmen miteinander verbundenen Glasscheiben ist.

13. Verbundscheibe nach einem der vorangehenden Ansprüche, **dadurch gekennzeichnet, dass** das Glasscheibenelement (5, 7, 6) mindestens eine vorgespannte oder teilvorgespannte Glasscheibe umfaßt.

14. Verwendung einer Verbundscheibe nach einem der vorangehenden Ansprüche für Verglasungen, insbesondere für großflächige und/oder rahmenlose Schräg- oder Deckenverglasungen.

15. Brandschutzverglasung unter Verwendung von Befestigungen nach einem der Ansprüche 1 bis 13, wobei im Brandfall bei Versagen der Verbindung (9) zwischen dem Glasscheibenelement (5, 7, 6) und der Vorsatzscheibe (8) letztere von den Sicherungselementen (42) unter Bildung eines zusätzlichen Isolationszwischenraums (Z) zu dem Glasscheibenelement (5, 7, 6) aufgefangen und gehalten wird.
